# EUROPÄISCHE PATENTSCHRIFT

(11) **EP 1 563 947 B1**
(45) Veröffentlichungstag und Bekanntmachung des Hinweises auf die Patenterteilung: **14.02.2007**
(21) Anmeldenummer: 05008647.9
(22) Anmeldetag: 05.11.2003
(51) Int. Cl.: B23Q 1/66, B23Q 11/08, B23Q 1/54, B25J 17/02, B23Q 1/01

(54) **Werkzeugmaschine mit zwei verschwenkbaren Rüst- und Arbeitsstationen**
Machine tool with two tiltable mounting and working stations
Machine-outil avec deux postes de montage et d'usinage pivotables

(30) Priorität: 13.11.2002 DE 10252824
(43) Veröffentlichungstag der Anmeldung: 17.08.2005
(62) Teilanmeldung aus: 03025405.6
(73) Patentinhaber: DECKEL MAHO Pfronten GmbH, 87459 Pfronten (DE)
(72) Erfinder: Gronbach, Hans, 87637 Eisenberg (DE)
(74) Vertreter: Beetz & Partner

(56) Entgegenhaltungen:
- EP-A- 0 650 800
- DE-C1- 19 613 641
- DE-U- 29 801 236

## Beschreibung

Die Erfindung betrifft eine Werkzeugmaschine zur spanenden Bearbeitung von großflächigen hochkant stehenden Werkstücken nach dem Oberbegriff von Anspruch 1 (siehe, z.B., DE-298 01236-U).

Derartige Werkzeugmaschinen bzw. Bearbeitungszentren werden in neuerer Zeit zur Fräs- und Bohrbearbeitung von großen, insbesondere großflächigen Werkstücken in der Automobilindustrie, im Flugzeugbau, od. dgl., eingesetzt. In der Regel sind jeder Maschine zwei Werkstückstationen zugehörig, die an der Rückseite des Langbetts nebeneinander angeordnet sind und deren großflächige Werkstückträger wechselweise aus einer horizontalen Rüststellung ein eine vertikale Arbeitsstellung geschwenkt werden. Dies ermöglicht einen durchgehenden Produktionsbetrieb, da die in der Vertikalstellung befindlichen Werkstücke bearbeitet und gleichzeitig bereits bearbeitete Werkstücke von dem in seiner Horizontalstellung befindlichen Werkstückträger abgebaut oder neue Werkstücke auf diesen aufgebaut werden können. Zum Verschwenken der im wesentlichen plattenförmigen Werkstückträger werden vorzugsweise ausreichend lange Druckmittelzylinder verwendet, die rückseitig angreifen. Die Länge des Bettes und der darauf montierten Führungen ist so gewählt, daß der Fahrständer wechselweise vor die eine oder andere Station verfahren kann. Bei der Bearbeitung der großflächigen Werkstücke ergibt sich häufig ein extrem hoher Späneanfall aufgrund der hohen Spanleistungen der eingesetzten Bearbeitungseinheiten. Um die Umgebung der Maschine vor Verschmutzungen durch Späne und Flüssigkeiten zu schützen, sind die Arbeitsbereiche vor den beiden Stationen von einer durchgehenden Schutzkabine umgeben. Zusätzlich ist der Arbeitsbereich vor dem in seine horizontale Rüststellung verschwenkten Werkstückträger durch eine Tür abgetrennt, um Verschmutzungen der Rüststation durch Späneflug und Flüssigkeiten zu verhindern. Bisherige Maschinen dieses Typs verwenden konventionelle Fahrständer, bei denen der die Bearbeitungseinheit bildende Fräskopf in einem in einer Koordinatenachse verfahrbaren Schlitten angeordnet ist, wobei die Arbeitsspindel Bewegungen in ihrer Längsachse in der Bearbeitungseinheit ausführen kann. Diese in der Praxis seit langem bewährten Maschinen sind hinsichtlich einer optimalen Ausnutzung der jeweiligen Arbeitsräume begrenzt.

Daneben wurden auch bereits Vorschläge für nach dem Hexapodenprinzip konzipierte Werkzeugmaschinen des vorgenannten Typs gemacht, die allerdings wegen Problemen bezüglich einer genauen und hochstabilen Werkzeugpositionierung während der Bearbeitung noch keinen Eingang in die Praxis gefunden haben.

Aufgabe der Erfindung ist es, eine gattungsgemäße Werkzeugmaschine zur spanenden Bearbeitung von großflächigen hochkant stehenden Werkstücken zu schaffen, die bei relativ einfachem konstruktivem Aufbau die jeweilige Rüststation vom Arbeitsraum abtrennt.

Diese Aufgabe wird erfindungsgemäß durch die Werkzeugmaschine nach Anspruch 1 gelöst.

Um einen bei modernen Bearbeitungszentren üblichen automatisierten Ablauf der verschiedenen Bearbeitungsvorgänge zu gewährleisten, ist die Schiebetür zweckmäßigerweise mittels eines programmgesteuerten Linearantriebs, z.B. eines Druckmittelzyliners, eines elektrischen Linearmotors, eines Spindeltriebs, eines Riementriebs, od. dgl., verschiebbar.

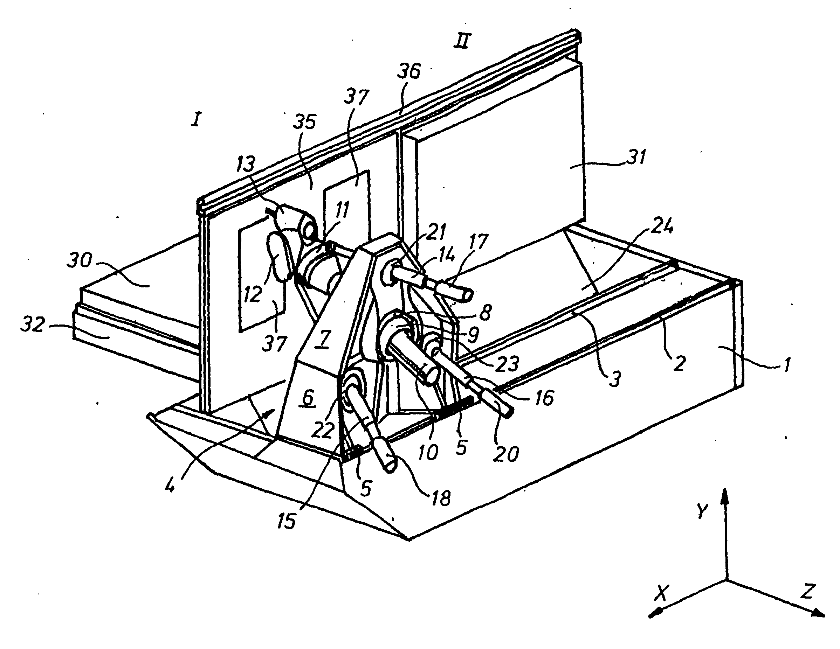

Im folgenden wird ein bevorzugtes Ausführungsbeispiel der Erfindung anhand der Zeichnung ausführlicher beschrieben, in der die erfindungsgemäße Werkzeugmaschine in perspektivischer Schrägansicht schematisch dargestellt ist.

Die dargestellte Werkzeugmaschine enthält ein relativ flaches Langbett 1, auf dessen Oberseite zwei Führungsschienen 2, 3 montiert sind. Auf diesen Führungsschienen 2, 3 ist ein Fahrständer 4 mittels eines - nicht dargestellten - Linearantriebs, z.B. eines Spindeltriebs, eines elektrischen Linearmotors od. dgl., in Richtung der durch die Erstreckung der Führungsschienen 2, 3 vorgegebenen Koordinatenachse X verfahrbar. Dieser Fahrständer 4 hat in Stirnansicht etwa die Form eines Hauses und weist einen mit Führungsschuhen 5 versehenen breiteren Unterbau 6 sowie einen sich dachartig nach oben verjüngenden Oberteil 7 auf. In dem von den Außenwänden umgrenzten Innenbereich des Fahrständers befinden sich Zwischenwände und Versteifungsrippen, so daß sich eine insgesamt hochsteife Gesamtkonstruktion ergibt. Etwa im mittleren Teil des Fahrständers 4 ist in einer Ausnehmung 8 ein Universallager 9 angeordnet, in welchem ein in sich formsteifes Tragrohr 10 längs verschiebbar aufgenommen ist. Das in der Zeichnung obere Ende dieses Tragrohrs 10 ist als sich konisch erweiternde Glocke 11 ausgebildet, an welcher ein Schwenkkopf 12 um die Längsachse des Tragrohrs 10 verdrehbar montiert ist. Dieser Schwenkkopf 12 bildet den Träger für eine um eine zusätzliche Achse verschwenkbare Arbeitsspindel 13. Seitlich an der Glocke 11 sind ferner die ausfahrbaren Teile von drei Teleskopstützen 14, 15, 16 um mehrere Achsen beweglich befestigt, die über je einen z.B. hydraulischen Linearantrieb 17, 18, 20 verfügen. Diese drei Teleskopstützen sind um einen Winkel von jeweils 120° zur Längsachse des Tragrohres 10 versetzt angeordnet und in jeweils einem Universallager 21, 22, 23 im Fahrständer 4 gelagert. Die dargestellte Anordnung einer oberen 14 und zweier unterer 15, 16 Teleskopstützen wirkt sich günstig auf die Gesamtstabilität der Bearbeitungseinheit aus.

Die dargestellte Werkzeugmaschine enthält zwei Arbeits- bzw. Rüststationen I und II mit jeweils einem plattenförmigen Werkstückträger 30, 31, die an der Rückseite des Langbettes 1 nebeneinander positioniert sind. Beide Werkstückträger 30, 31 sind gesondert zwischen einer horizontalen und einer vertikalen Stellung verschwenkbar. In dem dargestellten Zustand befindet sich der Werkstückträger 30 der Station I in seiner horizontalen Lage, in welcher er auf einem Unterbau 32 aufliegt. In diesem Unterbau 32 befindet sich für jeden Werkstückträger 30 und 31 je ein - nicht dargestellter - Druckmittelzylinder, dessen Kolben an der Rückseite des jeweiligen Werkstückträgers angreift, um ihn aus der horizontalen in die vertikale Stellung - und umgekehrt - zu verschwenken. Zwischen dem sich über nahezu die gesamte Länge des Langbettes 1 erstreckenden Arbeitsraum der Bearbeitungseinheit und der wechselnden Rüststation I bzw. II, in welcher sich der zugehörige Werkstückträger in seiner horizontalen Position befindet, ist eine Schiebetür 35 angeordnet, die an oberen und - nicht dargestellten - unteren Längsschienen 36 mittels eines ebenfalls nicht dargestellten Linearantriebes verschiebbar ist. In dieser Schiebetür 35 sind Sichtfenster 37 ausgebildet.

Zur Bearbeitung eines an dem in seiner vertikalen Arbeitsstellung befindlichen Werkstückträger 31 aufgespannten Werkstücks wird der Fahrständer 4 in den Führungsschienen 2, 3 nach rechts verfahren, so daß sich die die Arbeitsspindel 13 enthaltende Bearbeitungseinheit vor dem am Werkstückträger 31 aufgespannten Werkstück befindet. Das Tripodenkonzept ermöglicht in Verbindung mit der drehbaren Halterung des Schwenkkopfes 12 und der verschwenkbaren Lagerung der Arbeitsspindel bzw. des Fräskopfes 13 eine Positionierung des jeweiligen Werkstückes auch vor den äußersten Eckbereichen des Werkstückträgers 31, wobei das in der Arbeitsspindel 13 eingespannte Werkzeug beliebige Winkellagen im Raum einnehmen kann. Die hohe Eigensteifigkeit des Tragrohres 11 und seine Abstützung über die drei Teleskopstützen 14, 15, 16 gewährleistet ferner eine genaue und stabile Positionierung des Spindelkopfes 13, so daß hohe Spanleistungen bei Einhaltung kleiner Toleranzen möglich sind.

Nach dem Bearbeitungsvorgang des am Werkstückträger 31 gespannten Werkstückes wird der Werkstückträger 31 mittels seines rückseitigen Stellantriebes in die Horizontallage zurückgeschwenkt. Der sich dadurch ergebende Freiraum wird durch Verschieben der Tür 35 nach rechts geschlossen. Daraufhin kann der mit dem neuen Werkstück versehene Werkstückträger 30 aus seiner dargestellten Horizontalstellung in eine vertikale Bearbeitungsposition verschwenkt werden und nach einer Verfahrbewegung des Fahrständers 4 in die - in der Zeichnung dargestellte - Position kann die Bearbeitung des neuen Werkstücks aufgenommen werden. Auch in diesem Fall ist der vordere Bearbeitungsraum von dem rückwärtigen Rüstraum einerseits durch die dann verschobene Schiebetür 35 und andererseits durch den dann aufrechtstehenden Werkstückträger 30 abgeschlossen.

Ein besonderer Vorzug der dargestellten Werkzeugmaschine ergibt sich hinsichtlich der Behandlung bzw. Abführung der im Betrieb mitunter in erheblichen Mengen anfallenden Späne, die zusammen mit den zugeführten Flüssigkeiten in eine unter dem Arbeitsraum vorgesehene langgestreckte Wanne 24 fallen, die die Form eines Spitztroges hat, in deren Bodenabschnitt ein herkömmlicher Späneförderer angeordnet ist.

Die Erfindung ist nicht auf das in der Zeichnung dargestellte Ausführungsbeispiel beschränkt. So kann statt der beiden in einer horizontalen Ebene angeordneten Führungsschienen 2, 3 das Langbett auch so ausgebildet sein, daß sich der Fahrständer an einer schrägen Ebene abstützt, wobei die vordere Führungsschiene 2 in einem höheren Niveau als die hintere Führungsschiene 3 verläuft. Ferner kann am erweiterten Endteil des Tragrohres auch ein anders gestalteter Fräskopf montiert werden, der eine Ausrichtung der Werkzeugspindel 13 in verschiedenen Raumwinkellagen ermöglicht.

## Patentansprüche

1. Werkzeugmaschine zur spanenden Bearbeitung von großflächigen hochkant stehenden Werkstücken mit
- einem in einer ersten Koordinatenachse auf einem Langbett (1) verfahrbaren Fahrständer (4),
- einer am Fahrständer (4) in mindestens zwei weiteren Koordinatenachsen bewegbaren Bearbeitungseinheit mit schwenkbarer Arbeitsspindel (13),
- zwei wechselweisen Rüst- und Arbeitsstationen (I und II), die hinter dem Langbett (1) nebeneinander angeordnet sind,
- für jede Arbeitsstation (I und II) je einen verschwenkbaren Werkstückträger (30, 31), der aus einer horizontalen Rüststellung in eine vertikale Bearbeitungsstellung verschwenkbar ist, und
- eine bewegbare Tür (35), die den jeweiligen Rüstraum vom Arbeitsbereich abtrennt,
**dadurch gekennzeichnet, dass**
- die bewegbare Türe (35) eine einteilige Schiebetüre ist, die wechselweise vor den jeweils in seine horizontale Rüststellung niedergeschwenkten Werkstückträger (31; 32) verschiebbar ist.

2. Werkzeugmaschine nach Anspruch 1,
**dadurch gekennzeichnet, dass**
die Schiebetüre 35 mittels eines programmgesteuerten Linearantriebs verschiebbar ist.

3. Werkzeugmaschine nach Anspruch 1 oder 2,
**dadurch gekennzeichnet, dass**
unter dem Arbeitsbereich zwischen dem Langbett (1) und der Schiebetüre (35) ein als durchgehender Spitztrog (24) ausgebildeter Spänesammler angeordnet ist.

## Claims

1. Machine tool for machining edge-wise arranged large-area work pieces, comprising
- a movable column (4) which can be moved on a long bed (1) along a first coordinate axis,
- a machining unit movable at the movable column (4) along at least two further coordinate axes and having a pivotable working spindle (13),
- two alternate work and set-up stations (I and II) which are arranged adjacent to each other behind the long bed (1);
- one pivotable work carrier (30, 31) for each work station (I and II), respectively, which is pivotable from a horizontal set-up position into a vertical working position, and
- a movable door (35) separating the respective set-up space from the working space,
**characterized in that**
the movable door (35) is a one-part sliding door which is alternatively movable in front of the work carrier (31; 32) respectively pivoted down in its horizontal set-up position.

2. Machine tool according to claim 1, **characterized in that** the sliding door (35) is movable by means of a program-controlled linear drive.

3. Machine tool according to claim 1 or 2, **characterized in that** below the working space between the long bed (1) and the sliding door (35) a chip collecting device designed as a continuous conical trough is arranged.

## Revendications

1. Machine-outil pour l'usinage avec enlèvement de copeaux de pièces de grande surface dressées sur leur chant, comprenant :
- un chariot (4) mobile sur un banc longitudinal (1) sur un premier axe de coordonnées,
- une unité d'usinage à broche de travail pivotante (13) pouvant se déplacer sur le chariot mobile (4) sur au moins deux autres axes de coordonnées,
- deux stations d'équipement et de travail (I et II) en alternance, disposées l'une à côté de l'autre derrière le banc longitudinal (1),
- un support de pièce (30, 31) pour chacune des stations de travail (I et II), pouvant pivoter d'une position horizontale d'équipement vers une position de travail verticale, et
- une porte mobile (35) séparant le compartiment d'équipement de la zone de travail,
**caractérisée en ce que**
- la porte mobile (35) est une porte coulissante d'un seul tenant, coulissant en alternance devant le support de pièce (31 ; 32) rabaissé dans sa position horizontale d'équipement.

2. Machine-outil selon la revendication 1,
**caractérisée en ce que**
la porte mobile (35) peut être déplacée au moyen d'un entraînement linéaire commandé par programme.

3. Machine-outil selon la revendication 1 ou 2,
**caractérisée en ce qu'**
un collecteur de copeaux réalisé sous la forme d'une auge à bec traversante (24) est disposé sous la zone de travail entre le banc longitudinal (1) et la porte coulissante (35).
